Europäisches Patentamt

European Patent Office

Office européen des brevets

(19)

(11) Veröffentlichungsnummer: **0 102 604**
**A2**

(12) **EUROPÄISCHE PATENTANMELDUNG**

(21) Anmeldenummer: **83108460.3**

(22) Anmeldetag: **27.08.83**

(51) Int. Cl.³: **A 01 B 45/02**

(30) Priorität: **03.09.82 DE 8224900 U**

(43) Veröffentlichungstag der Anmeldung:
**14.03.84 Patentblatt 84/11**

(84) Benannte Vertragsstaaten:
**AT CH DE FR GB LI**

(71) Anmelder: **Alois Kober KG, Maschinenfabrik**
**Ichenhauserstrasse 14**
**D-8871 Kötz 2(DE)**

(72) Erfinder: **Lühr, Günter**
**Galgenbergweg 5**
**D-7907 Niederstotzingen(DE)**

(74) Vertreter: **Ernicke, Hans-Dieter, Dipl.-Ing.**
**Schwibbogenplatz 2b**
**D-8900 Augsburg(DE)**

(54) **Vertikutiergerät für die Bodenbearbeitung von Rasenflächen.**

(57) Um Vertikutiergeräte (1) für die Rasenpflege dem Gebrauch in privaten Gärten zugänglich zu machen, schlägt die Erfindung zur wesentlichen Verringerung der Herstellungskosten die koaxiale oder dicht benachbarte Anordnung des Rotationsmotors (5), der Arbeitswelle (16) und von lediglich zwei Laufrädern (2) an einem einfachen, holmgeführten Gehäuse (6) vor. Die Laufräder (2) sind radial zur Arbeitswelle (16) wegen Veränderung der Eindringtiefe der Vertikutiermesser (17) am Gehäuse (6) verstellbar befestigt. Die Vertikutiermesser (17) sind an der Arbeitswelle (16) um zu ihr parallele Schwenkachsen (18) frei drehbar gelagert. Sie richten sich unter Fliehkraftwirkung radial auf und sind bei Erreichen der Arbeitsdrehzahl aus ihrer Zentrifugalkraft in der Lage, Vertikutierschlitze in den Rasenboden einzubringen. Die Neigungsänderung des Vertikutiergerätes (1) hat dabei keinen Einfluß auf die Eindringtiefe der Vertikutiermesser (17).

Fig 1

EP 0 102 604 A2

## Vertikutiergerät für die Bodenbearbeitung von Rasenflächen

Die Erfindung bezieht sich auf ein Vertikutiergerät für die Bodenbearbeitung von Rasenflächen, bestehend aus einem mit Laufrädern versehenen, holmgeführten Gehäuse mit einem daran angeflanschten Rotationsmotor und einer davon angetriebenen Arbeitswelle, an der mit Abstand zueinander radial vorstehende Vertikutiermesser angeordnet sind.

Mit den meistens entgegengesetzt zur Drehrichtung der Laufräder in hoher Drehzahl angetriebenen Vertikutiermessern sollen in den Rasenboden in Fahrtrichtung verhältnismäßig schmale und durchlaufende Schlitze eingebracht werden, die den Rasen von schädlichem Rasenfilz befreien, damit sich die beengten Rasenpflanzen in Licht und Luft wieder frei entfalten können.

Durch die DE-AS 10 68 497 ist ein solches holmgeführtes Vertikutiergerät bekannt, welches an einem Gehäuse zwei Laufräder von verhältnismäßig großem Durchmesser und bedienungsseitig eine an Hebelarmen gelagerte Abstützwalze aufweist. Auf der Oberseite des Gehäuses ist ein Verbrennungsmotor angeflanscht, der über ein Riemen- bzw. Kettengetriebe die Arbeitswelle antreibt, welche von der Achse der Laufräder erheblich distanziert ist. Auf der Arbeitswelle sind dreieckig geformte, radial vorkragende Vertikutiermesser ortsfest befestigt, die mit ihren zueinander versetzten Spitzen in die Rasenfläche eindringen sollen. Die Eindringtiefe der Vertikutiermesser wird durch eine Schwenkbewegung der Abstützwalze herbeigeführt.

0102604

Vertikutiergeräte dieser oder ähnlicher Art sind verhältnismäßig teuer; da sie wesentlich seltener als Rasenmäher zum Einsatz kommen, ihre Kosten aber höher als diejenigen von Rasenmähern sind, beschränkt sich der Einsatz vorbekannter Vertikutiergeräte im wesentlichen für gewerbliche Zwecke bzw. für die Bearbeitung größerer Rasenflächen.

Die grundlegende Aufgabe der Erfindung besteht daher darin, ein Vertikutiergerät so auszugestalten, daß es billiger als ein Rasenmäher hergestellt werden kann und damit für den Einsatz für private Zwecke, selbst bei kleineren Rasenflächen, in Frage kommt. Im speziellen wird angestrebt, eine gewisse Anzahl sonst notwendiger Bauteile einzusparen, die Montage zu erleichtern, die Verstellung der Eindringtiefe der Vertikutiermesser zu vereinfachen und die Stanzzeit der Vertikutiermesser zu erhöhen.

Ausgehend vom eingangs erwähnten, vorbekannten Vertikutiergerät besteht das Wesen der Erfindung darin, daß das Vertikutiergerät lediglich zwei Laufräder aufweist, deren Achsen koaxial oder eng benachbart zur Achse der Arbeitswelle liegen, und daß die Arbeitswelle an einem Ende direkt mit dem zugleich ihr eines Lager bildenden Motorstummel des unter der Gehäusehaube angeordneten Rotationsmotors verbunden und an ihrem anderen Ende in einem einzigen Lager am Gehäuse geführt ist.

Zufolge der Koaxialität bzw. der engen Nachbarschaft der Achsen der Laufräder und der Arbeitswelle bedarf das erfindungsgemäße Vertikutiergerät keiner weiteren Abstützung am Boden während des Vertikutierens.

Es ist lediglich zweckmäßig, die Laufräder radial zur Achse der Arbeitswelle verstellbar am Gehäuse anzuordnen, um auf diese Weise die Eindringtiefe der Vertikutiermesser ändern zu können. Mit dieser Konzeption ist die Möglichkeit geschaffen, die Haltung des Vertikutiergerätes während der Rasenbearbeitung unabhängig von der Eindringtiefe zu machen, weil die genannten Achsen koaxial oder in geringem Abstand zueinander liegen. Die Körpergröße der Bedienungspersonen hat somit keinen Einfluß auf die Eindringtiefe.

Allerdings muß durch diese Gestaltung die koaxiale Anordnung des Rotationsmotors zur Arbeitswelle in Kauf genommen werden, was dazu führt, daß die Gehäusebreite größer als die Arbeitsbreite der Vertikutiermesser ist. Dies gilt natürlich nur für den Fall, daß der Rotationsmotor innerhalb des Gehäuses angeordnet ist. Gerade für den Hausgebrauch hat sich aber erwiesen, daß diese Verminderung der Arbeitsbreite, bezogen auf die Gehäusebreite, keinen nachteiligen Einfluß ausübt, zumal mit der erfindungsgemäßen Anordnung ermöglicht wird, die Arbeitswelle nur in einem einzigen Lager am Gehäuse zu lagern; an der anderen Seite ist die Arbeitswelle erfindungsgemäß unmittelbar mit dem Motorstummel des Rotationsmotors verbunden.

Die Erfindung bietet die Möglichkeit, einen Elektromotor der Schutzklasse II zu verwenden, ohne daß die Erfindung darauf beschränkt ist, der bei geringen Abmessungen die erforderliche Leistung und die benötigte Drehzahl für die Vertikutiermesser bereitstellen kann.

Es hat sich als zweckmäßig erwiesen, den Rotationsmotor an einem Bodenblech anzuflanschen, das das haubenartige Gehäuse in einer der Motorlänge entsprechenden Breite nach unten abdeckt und mit dem Gehäuse verbunden ist. Auf diese Weise wird der Vorteil erzielt, das Gehäuse besonders einfach zu gestalten und dennoch erheblich zu versteifen. Die Montage des Rotationsmotors kann von dem Haubeninnenraum, der später von der Arbeitswelle durchsetzt wird, vorgenommen werden.

In einem ersten Ausführungsbeispiel der Erfindung ist am Motorstummel eine ihn umgreifende drehschlüssig mit ihm verbundene und im Außenumfang prismatisch ausgebildete Hülse befestigt, auf der das eine Ende der Arbeitswelle nach Art einer Steckverbindung drehschlüssig sitzt. Dabei erweist es sich als zweckmäßig, wenn die Arbeitswelle in einer Radialebene zu ihrer Achse geteilt ausgebildet ist und beide Teile miteinander auf die mit dem Motorstummel verbundene Hülse sowie auf einen das eine Lager tragenden Zapfen festspannbar sind. Man kann also zunächst den Motor mit dem Bodenblech am Gehäuse festschrauben und danach die geteilte Arbeitswelle auf den Motorstummel festspannen, was erhebliche Erleichterungen und Ersparnisse in der Bauteilgestaltung und in der Montage herbeiführt.

In einem anderen Ausführungsbeispiel ist vorgesehen, daß das einzelne Laufrad mit einer am Gehäuse radial zur Achse der Arbeitswelle geführten Schiene o. dgl. verstellbar am Gehäuse angeflanscht ist. Zu diesem Zweck kann vorgesehen sein, daß die Schiene an einem von der Stirnwand des Gehäuses abstehenden, hutartigen Flansch geführt ist. Lagerseitig kann der Flansch zugleich als eine Lagerschale für ein in die Stirnwand des Gehäuses einsetzbares Kugellager ausgebildet sein.

Die Erfindung bietet darüber hinaus die Möglichkeit, in der Ge-

0102604

häusehaube längs der Arbeitswelle eine Austrittsöffnung mit einem sich daran nach außen und in Fahrtrichtung anschließenden Auffangbehälter vorzusehen, in dem das gelöste Material gesammelt wird. In diesem Falle empfiehlt es sich, die Arbeitswelle nach Art von Windflügeln auszubilden, was dadurch besonders erleichtert ist, weil beim Ausführungsbeispiel der Erfindung die Arbeitswelle geteilt in Form von Halbschalen ausgebildet sein kann.

Bei einer weiteren Ausgestaltung der Erfindung ist am Gehäuse bedienungsseitig ein Abstützbügel angeordnet und dieser zugleich als Unfallschutz ausgebildet. Dieser Abstützbügel dient dazu, das Vertikutiergerät in der Parkstellung am Boden abzustützen, so daß es nicht umkippen kann. Beim Vertikutieren befindet sich dieser Abstützbügel jedoch distanziert vom Boden, indem man das Gehäuse am Holmen leicht anhebt. Dieser Abstützbügel hat somit keinen Einfluß auf die Vertikutierarbeit.

Die Aufgabe der Erfindung, ein Vertikutiergerät nach Kosten und Gestaltung auch für den Hausgebrauch, also für private Zwecke, einsetzbar zu machen, wird im Sinne der Erfindung überraschenderweise auch dadurch wesentlich gefördert, daß die Vertikutiermesser an der Arbeitswelle um parallel zu ihr sich erstreckende Achsen frei drehbar gelagert sind. Im Ruhezustand der Arbeitswelle hängen die Vertikutiermesser in vertikaler Richtung an ihren Lagern. Sie richten sich erst unter Fliehkraftwirkung auf, wobei die Rotationsgeschwindigkeit der Arbeitswelle und die Masse der einzelnen Vertikutiermesser so aufeinander abgestimmt sind, daß die Vertikutiermesser erst kurz vor Erreichen der Arbeitsdrehzahl die erforderliche Streckkraft aufbringen, die notwendig ist, um in den Rasenboden einzudringen.

Dies hat den Vorteil, daß der Rotationsmotor ohne wesentlichen Widerstand in die Arbeitsdrehzahl beschleunigt werden kann, was wiederum zur Kostenersparnis und geringen Dimensionierung des Rotationsmotors beiträgt. Zugleich ergibt sich aber dadurch der Vorteil der wesentlich höheren Standzeit der Vertikutiermesser, die nämlich zufolge ihrer freidrehbaren Lagerung in der Lage sind, beim Auftreffen auf Widerstände, z. B. Steine, schwenkend auszuweichen, ohne daß der Rotationsmotor dadurch belastet wird. Zufolge dieser Wirkung ist es möglich, die Vertikutiermesser aus einfachen Stanzblechen zu bilden, die sogar eine rechteckige Grundfläche besitzen können. Eine dreieckige, geschwungene oder mit geschliffenen Schneidkanten versehene Gestaltung der Vertikutiermesser ist deshalb nicht erforderlich.

Zweckmäßigerweise besteht die Arbeitswelle aus Windflügel bildenden, gegeneinander verspannten Halbschalen, die radial sich erstreckende Einschnitte zur Aufnahme der Vertikutiermesser aufweisen. Zwischen den Halbschalen sind beim Ausführungsbeispiel der Erfindung die Einschnitte kreuzende und parallel zur Achse der Arbeitswelle verlaufende Lagerstangen angeordnet, auf denen die Vertikutiermesser gelagert sind. Diese Lagerstangen können zwischen den Halbschalen längsverschieblich geführt und gegen axiale Bewegung gesichert sein. Es ist aber auch eine Verspannung der Lagerstangen zwischen den Halbschalen durchführbar.

Der Vorteil dieser Anordnung liegt in der einfachen Bauweise, der billigen Montage und der leichten Auswechselbarkeit der Vertikutiermesser, die nach Lösen der Lagerstange sogar in ihrer Lage umgedreht werden können, um die nachlaufenden Kanten bei Stumpfwerden der vorauslaufenden Kanten zum Einsatz zu bringen.

- 7 -

0102604

Ausgehend von der erfindungsgemäßen Gestaltung des Vertikutiergerätes bieten sich nun Varianten an, die durchaus auch über den Zweck des Vertikutierens hinausgehen können. So ist es denkbar, die Vertikutiermesser mit abgewinkelten Schneiden zu versehen, wodurch das Vertikutiergerät nach Art eines Rasenmähers eingesetzt werden kann, sofern die Rotationsebene der abgewinkelten Schneiden bis über die Standfläche der Laufräder angehoben wird. Die Erfindung beschränkt sich daher nicht auf die gezeigten Ausführungsbeispiele, sondern erstreckt sich auch auf weitere Ausgestaltungen, die sich aus der Erkenntnis der erfindungsgemäßen Offenbarung für den Fachmann ergeben.

Einzelheiten der Erfindung sind in der Zeichnung schematisch und beispielsweise dargestellt. Es zeigen:

Fig. 1: Eine Seitenansicht auf ein Vertikutiergerät,

Fig. 2: eine Unteransicht des Vertikutiergerätes gemäß Fig. 1 in Richtung des Pfeiles A,

Fig. 3: einen Vertikalschnitt durch die Arbeitswelle des Vertikutiergerätes entsprechend der Linie III-III in Fig. 2,

Fig. 4: einen Radialschnitt durch die Arbeitswelle und die Flanschverbindung für den Rotationsmotor, entlang der Linie IV-IV in Fig. 2,

Fig. 5: einen Radialschnitt durch eine Arbeitswelle mit frei drehbar daran gelagerten Vertikutiermessern, entlang der Linie V-V in Fig. 3 und

Fig. 6: eine Teildraufsicht auf die Arbeitswelle gemäß Fig. 5.

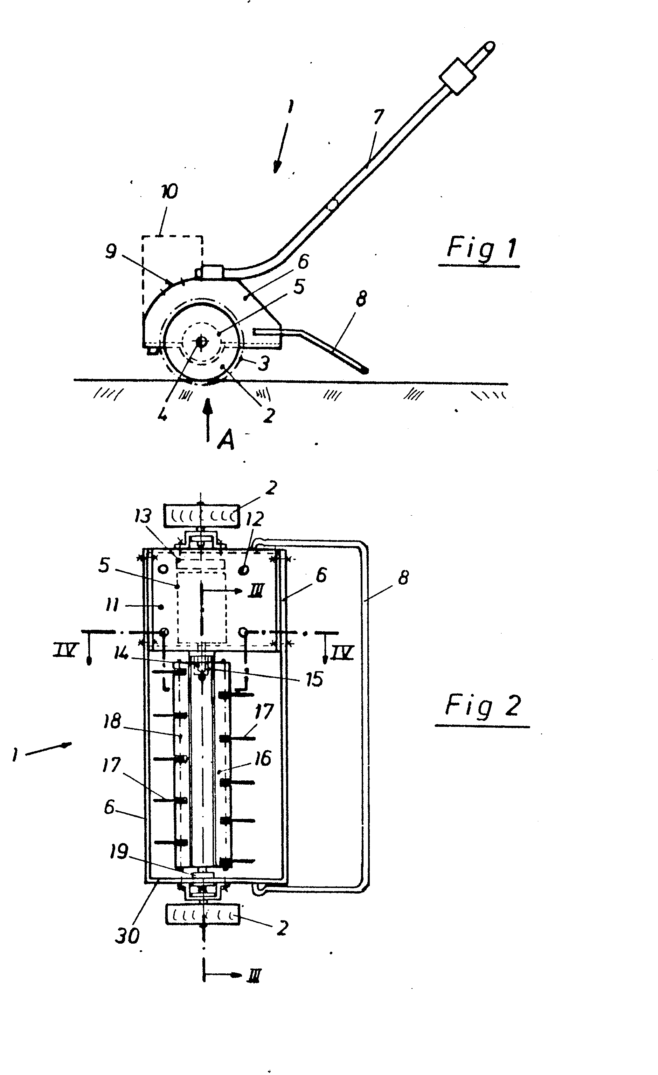

Das erfindungsgemäße Vertikutiergerät 1 ist in Fig. 1 in seiner prinzipiellen Gestaltung in Seitenansicht dargestellt.

Es weist lediglich zwei Laufräder 2 auf, die an der Außenseite eines Gehäuses 6 so gelagert sind, daß deren Rotationsachse 4 entweder koaxial oder eng benachbart zur Achse der Arbeitswelle 16 (vgl. Fig. 2) und des Rotationsmotors 5 liegt. Mit 3 ist die Rotationsbahn der wirksamen Randkanten der in Fig. 1 nicht dargestellten Vertikutiermesser bezeichnet. Am Gehäuse 6 ist ein Holm 7 für die Handbetätigung befestigt. Bedienungsseitig befindet sich am Gehäuse ein Abstützbügel 8, der beim Vertikutieren sich oberhalb der Grasfläche befindet und lediglich zum Abstellen des Vertikutiergerätes 1 bestimmt ist.

Die Vertikutiermesser rotieren bevorzugt entgegengesetzt zur Drehrichtung der Laufräder 2. Man kann daher im vorderen Bereich des Gehäuses 6 eine Austrittsöffnung 9 entsprechend der Arbeitsbreite der Vertikutiermesser anordnen und daran anschließend einen Auffangbehälter 10 vorsehen, in dem das Vertikutiergut gesammelt wird. Hierbei empfiehlt es sich, auf der Vertikutierwelle als Windflügel wirksame Elemente vorzusehen. Diese Einrichtung 9, 10 muß jedoch nicht unbedingt am Vertikutiergerät 1 vorgesehen sein.

Es zeigt sich, daß das Vertikutiergerät 1 in verschiedenen Neigungen des Holms 7 bewegt werden kann, ohne daß die Eindringtiefe der Vertikutiermesser davon beeinflußt wird, weil die Achsen der Laufräder 2 und der Arbeitswelle koaxial zueinander sich befinden bzw. eng benachbart sind. Um die Eindringtiefe der Vertikutiermesser zu ändern, können die Laufräder 2, wie später gezeigt wird, in ungefähr vertikaler Richtung am Gehäuse 6 verstellt werden.

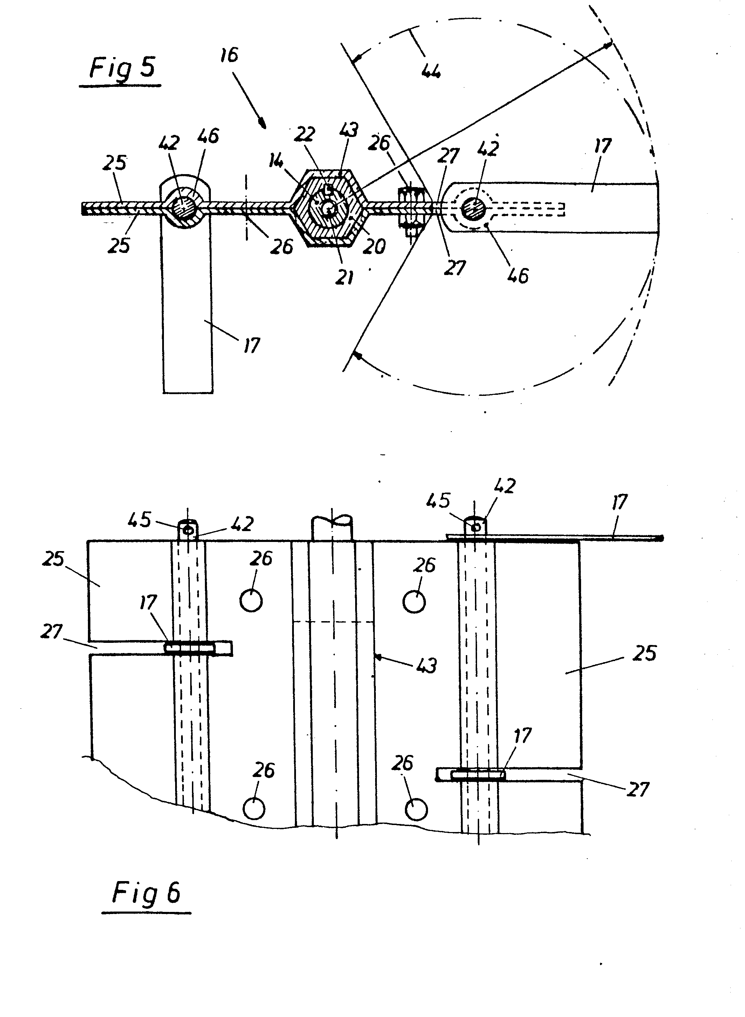

Wie die Fig. 2 in Verbindung mit dem Querschnitt von Fig. 4 zeigt, ist das haubenförmige Gehäuse 6 an einer Seite durch ein Bodenblech 11 abgedeckt, das mittels der Verschraubung 12 mit dem Flansch 41 des Rotationsmotors 5 verbunden wird. Dieses Bodenblech 11 ist vorzugsweise über Falze 40 (Fig. 4) mit der Haube 39 des Gehäuses 6 verschweißt. Der Rotationsmotor 5 kann von dem nach unten offenen Haubenhohlraum, der später von dem Vertikutierwerkzeug ausgefüllt wird, in den durch das Bodenblech 11 abgeschlossenen Hohlraum des Gehäuses 6 eingeführt und mit dem Bodenblech 11 verflanscht werden. Ein mit der Motorwelle verbundener Ventilator 13 sorgt für die Kühlung des Rotationsmotors 5, der zweckmäßigerweise als Elektromotor ausgebildet ist, ohne daß die Erfindung damit beschränkt wird.

Die Arbeitswelle 16 wird auf ihrer einen Seite mit dem Motorstummel 14 nach Art einer Steckverbindung direkt verbunden. Auf der anderen Seite der Arbeitswelle 16 ist ein einziges Lager 19 vorgesehen, das mittels einer später dargestellten einfachen Flanschverbindung in der Stirnwand 30 des Gehäuses 6 sitzt.

Die Vertikutiermesser 17 ragen radial über die Arbeitswelle 16 hinaus. Im bevorzugten Ausführungsbeispiel sind die Vertikutiermesser 17 um Schwenkachsen 18 frei drehbar gelagert, die sich parallel zur Achse der Arbeitswelle 16 erstrecken. Die Erfindung sieht aber auch die Möglichkeit vor, Vertikutiermesser 17 üblicher Bauart ortsfest mit der Arbeitswelle 16 zu verbinden.

Von der Gesamtbreite des Gehäuses 6 kann zum Vertikutieren nur derjenige Raum eingesetzt werden, in dem sich die Vertikutiermesser 17 befinden. Der vom Rotationsmotor 5 eingenommene Raum kann für das Vertikutieren nicht verwendet werden. Damit ergibt sich aber nur scheinbar ein Nachteil, weil die erfindungsgemäße Anordnung zur Folge hat, daß Übersetzungsgetriebe, Lager zusätzliche Laufräder u. dgl. eingespart und demgemäß Herstellungskosten erzielt werden können, die unter denjenigen von Rasenmähern liegen. Das erfindungsgemäße Vertikutiergerät ist daher wegen seiner Billigkeit besonders für den Hausgebrauch geeignet.

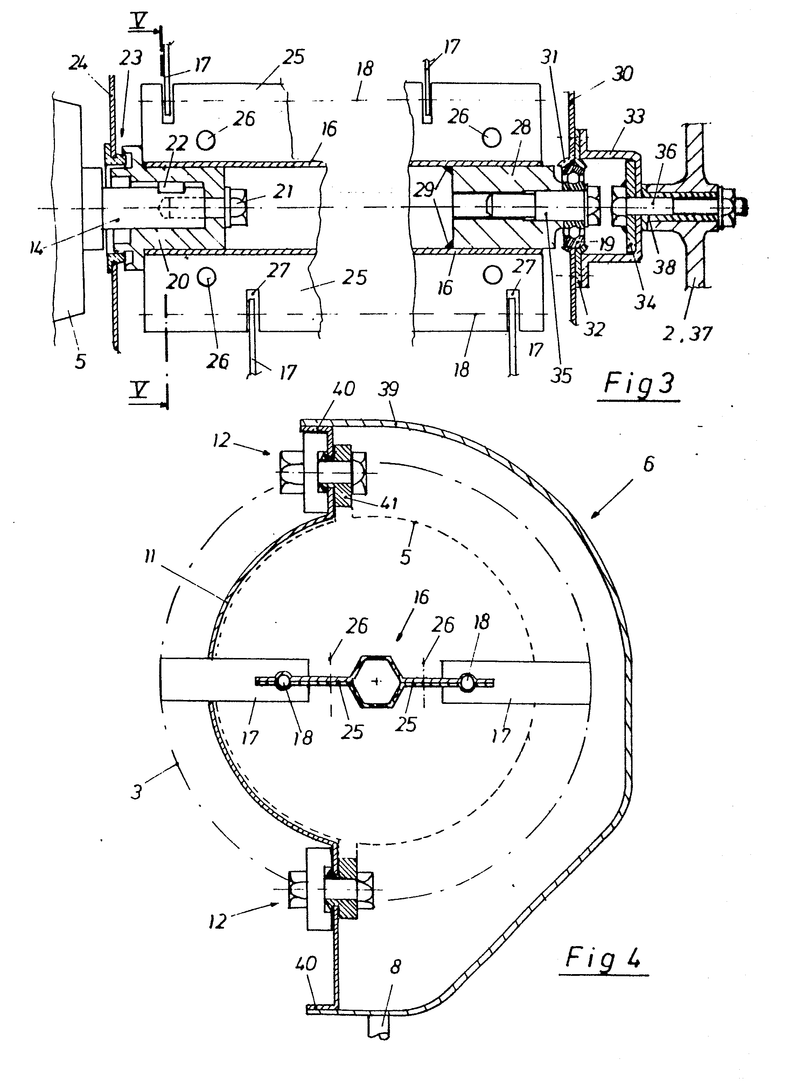

Im Beispiel der Fig. 3 ist die Lagerung und Ausgestaltung einer Arbeitswelle 16 mit Vertikutieranordnung im Längsschnitt gezeigt. Danach wird mit dem Motorstummel 14 eine ihn umgreifende Hülse 20 drehschlüssig verbunden, wozu beispielsweise eine Paßfederanordnung 22 vorgesehen ist. Diese mit der Schraube 21 am Motorstummel 14 befestigbare Hülse 20 weist außenseitig prismatische Form, beispielsweise Sechseck-Form, auf. Dieser Form ist die rohrartig ausgebildete Arbeitswelle 16 angepaßt, so daß sich die Möglichkeit einer Steckverbindung ergibt. Über die Labyrinthdichtung 23 ist die Hülse 20 gegenüber einer Stirnwand 24 des Gehäuses 6 abgedichtet, so daß Vertikutiergut nicht in den für den Rotationsmotor 5 vorgesehenen Raum gelangen kann. .

Es hat sich als zweckmäßig erwiesen, die Arbeitswelle 16 entlang einer Radialebene zweiteilig auszubilden. Dadurch entstehen Halbschalen 25, die über die Schrauben 26 miteinander verbunden werden. Diese Halbschalen 25 bilden durch entsprechende Profilierung das hohlprismatische Rohr der Arbeitswelle 16.

In diesem Falle braucht die Arbeitswelle 16 nicht stirnseitig auf die Hülse 20 aufgeschoben zu werden. Die Halbschalen 25 werden vielmehr in radialer Richtung auf die Hülse 20 aufgesetzt und dann verschraubt, so daß eine Klemmverbindung entsteht, die axial durch einen Bund an der Hülse 20 begrenzt ist. Man kann die Halbschalen 25 als Windflügel ausgestalten, so daß ein Auswurf des Vertikutiergutes aus dem Gehäuseinnenraum ermöglicht wird.

Auf der anderen Seite der Arbeitswelle 16 ist an einer Halbschale 25 ein Zapfen 28 angeschweißt, dessen Außenumfang dem hohlprismatischen Rohr der Arbeitswelle 16 angepaßt ist. Mit 29 ist die Schweißnaht bezeichnet. In diesem Zapfen 28 ist eine Lagerschraube 35 einschraubbar, mit der der innere Laufring des Kugellagers 19 koaxial zur Achse der Arbeitswelle 16 verspannt wird. Der äußere, im Außenumfang gewölbt ausgebildete Laufring des Kugellagers 19 sitzt in kragenförmigen Ausbördelungen einer Stirnwand 30 sowie eines Zwischenflansches 32, der mit Hilfe eines hutartigen Flansches 33 mit der Stirnwand 30 fest verbunden wird. Man kann daher das Kugellager 19 von außen her montieren und mit der Arbeitswelle 16 bzw. dem Zapfen 28 verbinden.

An dem hutartigen Flansch 33 wird das einzelne Laufrad 2 mit Hilfe seiner Nabe 37 befestigt. An der Innenseite des Flansches 33 ist vertikal bzw. radial verschieblich eine Schiene 34 geführt, mit der eine Lagerschraube 36 fest verbunden, beispielsweise verschweißt sein kann. Diese Lagerschraube 36 durchdringt den Flansch 33 in einem radial bzw. vertikal sich erstreckenden Langloch. Auf der Lagerschraube 36 ist eine Lagerhülse 38 verspannt, die ihrerseits die Nabe 37 des Laufrades 2 führt. Man braucht lediglich außenseitig eine Mutter der Lagerschraube 36 zu lösen, um durch Verstellen der Schiene 34 eine Lageänderung des Laufrades 2 gegenüber der Achse der Arbeitswelle 16 herbeizuführen und damit die Eindringtiefe der Vertikutiermesser 17 zu verändern. Jedes Laufrad 2 weist diese Verstelleinrichtung auf. Um Genauigkeit der Verstellung herbeizuführen, empfiehlt es sich, an der Schiene 34 eine Skala anzubringen, die mit dem stirnseitigen Rand des hutartigen Flansches 33, der mit dem Gehäuse 6 ortsfest bleibt, in Verbindung zu bringen.

Die Vertikutiermesser 17 sind beim Ausführungsbeispiel um Schwenkachsen 18, die parallel zur Achse der Arbeitswelle 16 sich erstrecken, frei drehbar gelagert. Zu diesem Zweck sind in den Halbschalen 25 Einschnitte 27 vorgesehen, in welche die Vertikutiermesser 17 eingreifen.

Die Fig. 4 zeigt in vergrößerter Darstellung gegenüber Fig. 1 und 2 die Befestigung des Rotationsmotors 5 über ein Bodenblech 11 am haubenartigen Gehäuse 6, 39. Das Bodenblech 11 ist in Richtung zum Boden gewölbt ausgebildet und mit Falzen 40 versehen, die mit der Haube 39 verbunden, insbesondere verschweißt sind und damit der Haube 39 ausreichende Festigkeit vermitteln. Der Flansch 41 des Rotationsmotors 5 wird an der Innenseite des Bodenbleches 11 mit der dargestellten Verschraubung 12 verspannt.

Außerdem ist aus Fig. 4 die Querschnittsgestaltung der im Ausführungsbeispiel der Fig. 3 dargestellten Arbeitswelle 16 gezeigt.

0102604

Im Zentrum bilden die beiden Halbschalen 25 ein sechseckiges Rohr, das gemäß Fig. 3 mit der Hülse 20 bzw. dem Zapfen 28 verbunden wird. Außerdem umschließen die Halbschalen 25 die Lagerungsmittel zur Bildung der Schwenkachse 18, an der die einzelnen Vertikutiermesser 17 frei drehbar gelagert sind. Die Schrauben 26 führen sowohl zur Verspannung der Halbschalen 25 mit der Hülse 20 und dem Zapfen 28 als auch zur Fixierung der Lager 18.

Wie aus den Fig. 5 und 6 hervorgeht, die ein selbständiges Ausführungsbeispiel der Erfindung darstellen, sind die Vertikutiermesser 17 etwa rechteckig als Stanzbleche geformt. Die Lage der Einschnitte 27 läßt erkennen, daß die Vertikutiermesser 17 frei schwenkbar gelagert sind, wobei mit 44 der Schwenkweg angedeutet ist. Im Stillstand hängen die Vertikutiermesser 17 lose nach unten, wie im linken Teil der Fig. 5 gezeigt wird. In Abhängigkeit von der Drehzahl des Rotationsmotors 5 richten sich die Vertikutiermesser 17 unter Fliehkraftwirkung auf, bis sie kurz vor Erreichen der Arbeitsdrehzahl eine so hohe Zentrifugalkraft entwickeln, daß sie unter ihrer Wirkung in Rasenflächen eindringen und eine einwandfreie Vertikutierarbeit herbeiführen. Treffen die Vertikutiermesser 17 auf Steine oder sonstige starre Hindernisse, dann können sie gegen die Wirkung der Fliehkraft ausweichen, was zu wesentlich verminderten Beschädigungen der wirksamen Schneidkanten gegenüber herkömmlichen Vertikutieranordnungen führt. In gestreckter Stellung führen die Schneidkanten der Vertikutiermesser 17 eine Kreisbewegung um die Achse der Arbeitswelle 16 aus.

In Fig. 5 ist ferner die drehschlüssige Verbindung 22 der

0102604

Hülse 20 mit dem Motorstummel 14 gezeigt. Die Hülse 20 ist sechseckig ausgebildet und wird von dem Rohr 43 umschlossen, welches von den Halbschalen 25 der Arbeitswelle 16 gebildet wird.

Zur Lagerung der Vertikutiermesser 17 sind Lagerstangen 42 vorgesehen, die in passend ausgebildete Führungen 46 der Halbschalen 25 eingesetzt werden. Um eine axiale Bewegung der Lagerstangen 42 zu vermeiden, ist gemäß Fig. 6 eine Splintanordnung 45 stirnseitig vorgesehen. Nach Lösen des Splintes 45 kann die Lagerstange 42 axial bewegt und das einzelne Vertikutiermesser 17 ausgetauscht oder umgedreht werden, damit die anfänglich rückseitige Schneidkante nun zum Einsatz gebracht werden kann.

0102604

## Stückliste

| | | | |
|---|---|---|---|
| 1 | Vertikutiergerät | 30 | Stirnwand |
| 2 | Laufrad | 31 | Kragen |
| 3 | Rotationsbahn | 32 | Zwischenflansch |
| 4 | Achse | 33 | hutartiger Flansch |
| 5 | Rotationsmotor | 34 | Schiene |
| 6 | Gehäuse | 35 | Lagerschraube |
| 7 | Holm | 36 | Lagerschraube |
| 8 | Abstützbügel | 37 | Nabe |
| 9 | Austrittsöffnung | 38 | Lagerhülse |
| 10 | Auffangbehälter | 39 | Haube |
| 11 | Bodenblech | 40 | Falz |
| 12 | Verschraubung | 41 | Flansch |
| 13 | Ventilator | 42 | Lagerstange |
| 14 | Motorstummel | 43 | Rohr |
| 15 | Kupplung | 44 | Schwenkweg |
| 16 | Arbeitswelle | 45 | Splint |
| 17 | Vertikutiermesser | 46 | Führung |
| 18 | Schwenkachse | | |
| 19 | Lager | | |
| 20 | Hülse | | |
| 21 | Schraube | | |
| 22 | Paßfeder | | |
| 23 | Labyrinthdichtung | | |
| 24 | Stirnwand | | |
| 25 | Windflügel (Halbschale) | | |
| 26 | Schraube | | |
| 27 | Einschnitt | | |
| 28 | Zapfen | | |
| 29 | Verschweißung | | |

- 16 -

0102604

Patentansprüche

1) Vertikutiergerät für die Bodenbearbeitung von Rasenflächen, bestehend aus einem mit Laufrädern versehenen, holmgeführten Gehäuse mit einem daran angeflanschten Rotationsmotor und einer davon angetriebenen Arbeitswelle, an der mit Abstand zueinander radial vorstehende Vertikutiermesser angeordnet sind, dadurch gekennzeichnet , daß das Vertikutiergerät (1) lediglich zwei Laufräder (2) aufweist, deren Achsen (4) koaxial oder eng benachbart zur Achse der Arbeitswelle (16) liegen, und daß die Arbeitswelle (16) an einem Ende direkt mit dem zugleich ihr eines Lager bildenden Motorstummel (14) des unter der Gehäusehaube (39) angeordneten Rotationsmotors (5) verbunden und an ihrem anderen Ende in einem einzigen Lager (19) am Gehäuse (6) geführt ist.

2) Vertikutiergerät nach Anspruch 1, dadurch gekenn - zeichnet , daß der Rotationsmotor (5) an einem Bodenblech (11) angeflanscht ist, daß das haubenartige Gehäuse (6, 39) in einer der Motorlänge entsprechenden Breite nach unten abdeckt und mit dem Gehäuse (6) verbunden ist.

3) Vertikutiergerät nach Anspruch 1 oder 2, dadurch ge - kennzeichnet , daß am Motorstummel (14) eine ihn umgreifende, drehschlüssig mit ihm verbundene und im Außenumfang prismatisch ausgebildete Hülse (20) befestigt ist, auf der das eine Ende der Arbeitswelle (16) nach Art einer Steckverbindung drehschlüssig sitzt.

4) Vertikutiergerät nach Anspruch 1 oder einem der folgenden, dadurch  g e k e n n z e i c h n e t  , daß die Arbeitswelle (16) in einer Radialebene zu ihrer Achse geteilt ausgebildet ist und beide Teile (25) miteinander und auf die mit dem Motorstummel (14) verbundene Hülse (20) sowie auf einen das eine Lager (19) tragenden Zapfen (28,35) festspannbar sind.

5) Vertikutiergerät nach Anspruch 1, dadurch  g e k e n n - z e i c h n e t  , daß das einzelne Laufrad (2) mit einer am Gehäuse (6) radial zur Achse der Arbeitswelle (16) geführten Schiene (34) o. dgl. verstellbar am Gehäuse (6) angeflanscht ist.

6) Vertikutiergerät nach Anspruch 5, dadurch  g e k e n n - z e i c h n e t  , daß die Schiene (34) an einem von der Stirnwand (30) des Gehäuses (6) abstehenden, hutartigen Flansch (33) geführt ist.

7) Vertikutiergerät nach Anspruch 6, dadurch  g e k e n n - z e i c h n e t  , daß der Flansch (33) zugleich als eine Lagerschale (32) für ein in die Stirnwand (30) des Gehäuses (6) einsetzbares Kugellager (19) ausgebildet ist.

8) Vertikutiergerät für die Bodenbearbeitung von Rasenflächen, bestehend aus einem mit Laufräder versehenen, holmgeführten Gehäuse mit einem daran angeflanschten Rotationsmotor und einer davon angetriebenen Arbeitswelle, an der mit Abstand zueinander radial vorstehende Vertikutiermesser angeordnet sind, insbesondere nach Anspruch 1 oder einem der folgenden, dadurch  g e k e n n z e i c h n e t  , daß die Vertikutier-

messer (17) an der Arbeitswelle (16) um parallel zu ihr sich erstreckende Achsen (18) frei drehbar gelagert sind.

9) Vertikutiergerät nach Anspruch 8, dadurch g e k e n n - z e i c h n e t , daß die Arbeitswelle (16) aus Windflügel (25) bildenden, gegeneinander verspannten Halbschalen besteht, die radial sich erstreckende Einschnitte (27) zur Aufnahme der Vertikutiermesser (17) aufweisen.

10) Vertikutiergerät nach Anspruch 8 oder 9, dadurch g e - k e n n z e i c h n e t , daß zwischen den Halbschalen (25) die Einschnitte (27) kreuzende und parallel zur Achse der Arbeitswelle (16) verlaufende Lagerstangen (42) angeordnet sind, auf denen die Vertikutiermesser (17) gelagert sind.

11) Vertikutiergerät nach Anspruch 10, dadurch g e k e n n - z e i c h n e t , daß die Lagerstangen (42) zwischen den Halbschalen (25) längsverschieblich geführt und gegen axiale Bewegung gesichert (45) sind.

12) Vertikutiergerät nach Anspruch 8 oder folgenden, dadurch g e k e n n z e i c h n e t , daß in der Gehäusehaube (39) längs der Arbeitswelle (16) eine Austrittsöffnung (9) mit einem sich daran nach außen und in Fahrtrichtung anschliessenden Auffangbehälter (10) vorgesehen sind.

13) Vertikutiergerät nach Anspruch 1 oder einem der folgenden, dadurch g e k e n n z e i c h n e t , daß am Gehäuse (6) bedienungsseitig ein Abstützbügel (8) angeordnet und dieser zugleich als Unfallschutz ausgebildet ist.

Dipl.-Ing. H. D. Ernicke

Patentanwalt

113

0102604

Fig 1

Fig 2

0102604

Fig 3

Fig 4

Fig 5

Fig 6